Europäisches Patentamt

European Patent Office

Office européen des brevets

(19)

(11) **EP 1 274 596 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.⁷: $B60G\ 17/015$, B60G 11/27

(21) Anmeldenummer: **01925414.3**

(86) Internationale Anmeldenummer:
**PCT/EP2001/002692**

(22) Anmeldetag: **10.03.2001**

(87) Internationale Veröffentlichungsnummer:
**WO 2001/076897 (18.10.2001 Gazette 2001/42)**

(54) **VERFAHREN ZUR BESTIMMUNG DER RADAUFSTANDSKRAFT EINES KRAFTFAHRZEUGES**

METHOD FOR DETERMINING THE WHEEL LOADING OF A MOTOR VEHICLE

PROCEDE DE DETERMINATION DE LA CHARGE SUR ROUE D'UN VEHICULE A MOTEUR

(84) Benannte Vertragsstaaten:
**AT BE CH CY DE DK ES FI FR GB GR IE IT LI LU MC NL PT SE TR**

(30) Priorität: **07.04.2000 DE 10017506**

(43) Veröffentlichungstag der Anmeldung:
**15.01.2003 Patentblatt 2003/03**

(73) Patentinhaber: **Continental Aktiengesellschaft
30165 Hannover (DE)**

(72) Erfinder: **STILLER, Alexander
30823 Garbsen (DE)**

(56) Entgegenhaltungen:
**US-A- 4 783 089          US-A- 5 373 445**

**Beschreibung**

Die Erfindung betrifft ein Verfahren zur Bestimmung der Radaufstandskraft eines Kraftfahrzeugrades, dem eine Luftfeder zugeordnet ist, mit der der Fahrzeugaufbau gegenüber dem Kraftfahrzeugrad abgefedert ist. Ein gattungsgemäßes Verfahren ist aus US-A-5,373,445 bekannt.

Moderne Kraftfahrzeuge verfügen häufig über mindestens ein Fahrstabilitätssystem, wie z.B. einem Antiblokkiersystem (ABS) oder einem elektronisch geregelten Stabilitätsprogramm (ESP), das eine ungewünschte Drehung des Kraftfahrzeuges um die Hochachse unterdrückt. Die heutigen Fahrstabilitätsprogramme überwachen mit Sensoren die Rotation der Räder des Kraftfahrzeuges und leiten daraus die für einen Regelvorgang notwendigen Regelgrößen, z.B. die Bremskraft an den einzelnen Rädern, ab. Die bestehencen Fahrstabilitätsprogramme ließen sich verbessern, wenn sich zusätzlich zu den Drehzahlen die Radaufstandskräfte der einzelnen Räder überwachen ließen. So ist es einleuchtend, dass bei einem Bremsvorgang ein Rad mit einer geringen Radaufstandskraft mit weniger Bremskraft zu beaufschlagen ist als ein Rad mit einer hohen Aufstandskraft, um in der gleichen Fahrsituation des Kraftfahrzeuges ein Blockieren des Rades zu unterdrücken. Darüber hinaus lassen sich aus den Radaufstandskräften weitere wichtige physikalische Größen des Kraftfahrzeuges, wie z.B. seine Gewichtskraft bzw. Masse und die Achslastverteilungen berechnen. Bisher ist kein Verfahren bekannt geworden, mit dem mit geringem Aufwand die Radaufstandskräfte der Räder des Kraftfahrzeuges exakt bestimmt werden können.

Der Erfindung liegt die Aufgabe zu Grunde, ein Verfahren zu schaffen, mit dem die Radaufstandskräfte der Räder eines Kraftfahrzeuges auf einfache Art und Weise bestimmt werden können.

Die Aufgabe wird gemäß dem Verfahren nach Anspruch 1 gelöst.

Die Berechnung der stationären Radaufstandskraft erfolgt unter Zugrundelegung der Ruhelage des Fahrzeugaufbaus im Bereich des Kraftfahrzeugrades. Unter der Ruhelage des Fahrzeugaufbaus im Bereich des Kraftfahrzeugrades ist die Lage des Fahrzeugaufbaus zu verstehen, die dieser stationär einnimmt, wenn auf ihn ausschließlich seine Gewichtskraft (inklusive der Zuladung) wirkt.

Unter stationärer Radaufstandskraft ist die Radaufstandskraft zu verstehen, die an einem Rad allein aufgrund der in vertikaler Richtung ruhenden Fahrzeugmasse erzeugt wird. Unter dynamischer Radaufstandskraft ist die Radaufstandskraft zu verstehen, die an einem Rad aufgrund eines in vertikaler Richtung schwingenden Fahrzeugaufbaus oder der Räder erzeugt wird.

Mit der Erfindung wird der Vorteil erzielt, dass in einem Kraftfahrzeug, das über eine Luftfederungsanlage verfügt, die Radaufstandskräfte an den Rädern, denen eine Luftfeder zugeordnet ist, einfach berechnet werden können. Ist jedem Rad des Kraftfahrzeuges eine Luftfeder zugeordnet, so können die Radaufstandskräfte aller Räder des Kraftfahrzeuges berechnet werden. Die Luftfederungsanlage braucht zur Berechnung der Radaufstandskräfte nicht über Bestandteile zu verfügen, die nicht ohnehin in einer herkömmlichen Luftfederungsanlage vorhanden sind. Aus diesem Grunde erhöhen sich die Kosten einer Luftfederungsanlage, in der die Radaufstandskräfte berechnet werden, gegenüber einer herkömmlichen Luftfederungsanlage nicht.

Bei der Berechnung der stationären Radaufstandskraft kann für die wirksame Querschnittsfläche ein fester Wert angenommen werden. Dies ist insbesondere dann möglich, wenn sich die wirksame Querschnittsfläche der Luftfeder in Abhängigkeit von ihrer Auslenkung nur wenig oder gar nicht ändert, wie dies beispielsweise bei einer Luftfeder mit einem strengzylindrischen Abrollkolben der Fall ist. Auch bei der Berechnung der dynamischen Radaufstandskraft kann für die Federsteifigkeit ein konstanter Wert angenommen werden. Bevorzugt wird jedoch bei der Berechnung der stationären Radaufstandskraft die Höhenabhängigkeit der wirksamen Querschnittsfläche und bei der Berechnung der dynamischen Radaufstandskraft die Höhenabhängigkeit der Federsteifigkeit der Luftfeder berücksichtigt, so wie es auch in Anspruch 2 beansprucht ist. Der Vorteil dieser Weiterbildung ist darin zu sehen, dass sowohl die stationäre Radaufstandskraft als auch die dynamische Radaufstandskraft und somit die gesamte Radaufstandskraft exakt berechnet werden können. Die höhenabhängige wirksame Querschnittsfläche und die höhenabhängige Federsteifigkeit der Luftfede, können aus einer Tabelle oder aus einer Kennlinie auf einfache Art und Weise bestimmt werden.

Gemäß einer Weiterbildung der Erfindung nach Anspruch 3

- ist der Fahrzeugaufbau gegenüber mindestens einer Fahrzeugachse, die einen Querstabilisator enthält, mit Luftfedern abgefedert, und
- wird aus dem Produkt der Federsteifigkeit des Querstabilisators und der Differenz der Auslenkungen der Luftfedern aus ihrer Ruhelage eine Ausgleichskraft berechnet und
- werden zur Bestimmung der Radaufstandskraft eines Rades der Fahrzeugachse die stationäre Radaufstandskraft und die dynamische Radaufstandskraft und, vorzeichenberichtigt, die Ausgleichskraft addiert.

Der Querstabilisator wirkt einer Schiefstellung des Fahrzeuges entgegen und versucht, dieses in die waagerechte Lage "zurückzudrücken". Dadurch werden an den Rädern der Achse, der der Querstabilisator zugeordnet ist, zusätzliche Kräfte (im Anspruch Ausgleichskräfte genannt) erzeugt. Wenn das Fahrzeug beispielsweise nach links geneigt ist, entlastet der Querstabilisator die linke Seite des Fahrzeuges und belastet die rechte Seite des Fahrzeuges, um das Fahrzeug in die waagerechte Position zu drücken. Dementsprechend ist bei der Berechnung der Radaufstandskraft für das Kraftfahrzeugrad auf der linken Seite zu der stationären und zu der dynamischen Radaufstandskraft eine negative Ausgleichskraft zu addieren und für das Rad auf der rechten Seite des Fahrzeuges eine positive Ausgleichskraft zu addieren (Näheres siehe Figurenbeschreibung). Der Vorteil der Weiterbildung ist darin zu sehen, dass bei der Berechnung der gesamten Radaufstandskraft eines Kraftfahrzeugrades auch die Einflüsse eines Querstabilisators berücksichtigt werden und somit eine exakte Berechnung der Radaufstandskraft auch bei einer Schiefstellung des Kraftfahrzeuges (z.B. in Kurvenfahrten) möglich ist.

Eine Weiterbildung der Erfindung nach Anspruch 4 ist dadurch gekennzeichnet, dass

- dem Kraftfahrzeugrad ein Dämpfer zugeordnet ist und aus dem Produkt des Dämpfungskoeffizienten und der Geschwindigkeit, die das Kraftfahrzeugrad relativ zum Fahrzeugaufbau hat, eine Dämpfungskraft berechnet wird und dass
- die Dämpfungskraft zur Radaufstandskraft addiert wird.

Der Vorteil dieser Weiterbildung ist darin zu sehen, dass bei der Berechnung der Radaufstandskraft eines Kraftfahrzeugrades auch die von einem Dämpfer auf das Rad ausgeübte Kraft berücksichtigt wird. Bei einem Dämpfer mit verstellbarem Dämpfungskoeffizienten wird zur Berechnung der Dämpfungskraft der aktuell eingestellte Dämpfungskoeffizient verwendet, so wie es auch in Anspruch 5 beansprucht ist.

Gemäß einer Weiterbildung der Erfindung nach Anspruch 6 wird die Ruhelage des Fahrzeugaufbaus im Bereich eines jeden Kraftfahrzeugrades und die stationäre Radaufstandskraft eines jeden Kraftfahrzeugrades, dem eine Luftfeder zugeordnet ist, unmittelbar nach dem Einschalten der Zündung und unmittelbar nach einem Regelvorgang an der dem Rad zugeordneten Luftfeder bestimmt.

Der Vorteil dieser Weiterbildung ist darin zu sehen, dass sich das Kraftfahrzeug unmittelbar nach dem Einschalten der Zündung bezüglich seiner vertikalen Bewegung in Ruhe befindet. Somit ist zu diesem Zeitpunkt auf einfache Art und Weise eine exakte Bestimmung der stationären Radaufstandskraft möglich. Die unmittelbar nach Einschalten der Zündung bestimmten Radaufstandskräfte werden in der Steuereinheit der Luftfederungsanlage gespeichert, so dass sie dort später für die Berechnung der gesamten Radaufstandskraft zur Verfügung stehen. Vorzugsweise wird eine Bestimmung der stationären Radaufstandskraft nach dem Einschalten der Zündung nur unterhalb eines vorgegebenen Geschwindigkeitsgrenzwertes vorgenommen. Eine Neuberechnung einer stationären Radaufstandskraft und der Ruhelage während der Fahrt des Kraftfahrzeuges ist nur dann notwendig, wenn an der diesem Rad zugeordneten Luftfeder ein Regelvorgang vorgenommen worden ist oder eine Abweichung von der Ruhelage auftritt, da sich in diesem Fall der Druck und die Höhenlage in dieser Luftfeder und somit auch die stationäre Radaufstandskraft an dem entsprechenden Rad geändert haben kann. Findet während der Fahrt an einer Luftfeder kein Regelvorgang statt und tritt keine stationäre Abweichung von der Ruhelage auf, wird die Radaufstandskraft des dieser Luftfeder zugeordneten Rades erst dann wieder neu berechnet, wenn die Zündung des Kraftfahrzeuges nach einem Abschalten erneut eingeschaltet wird. Ein weiterer Vorteil der Weiterbildung ist darin zu sehen, dass eine Berechnung der stationären Radaufstandskräfte und der stationären Ruhelage so selten wie möglich erfolgt, wodurch sich der Rechenaufwand reduziert.

Gemäß einer Weiterbildung der Erfindung nach Anspruch 7 wird eine Bestimmung der Ruhelage des Fahrzeugaufbaus im Bereich eines jeden Kraftfahrzeugrades und eine Bestimmung des Drucks in einer Luftfeder, mit dessen Hilfe die stationäre Radaufstandskraft berechnet wird, während einer Kurvenfahrt, einer Schiefstellung oder einer Verschränkung des Kraftfahrzeuges unterdrückt. Der Vorteil dieser Weiterbildung ist darin zu sehen, dass eine Bestimmung des Drucks in einer Luftfeder nicht vorgenommen wird, wenn das Ergebnis der Bestimmung auf Grund der Fahrsituation des Kraftfahrzeuges verfälscht werden könnte. Eine Kurvenfahrt des Kraftfahrzeuges kann beispielsweise am Lenkeinschlag erkannt werden. Eine Schiefstellung oder eine Verschränkung des Kraftfahrzeuges kann anhand der Signale der Höhensensoren, die den Luftfedern des Kraftfahrzeuges zugeordnet sind, erkannt werden.

Gemäß einer Weiterbildung der Erfindung nach Anspruch 8

- ist jedem Rad des Kraftfahrzeuges eine Luftfeder zugeordnet
- wird für jedes Rad die stationäre Radaufstandskraft berechnet und
- wird aus der Summe der stationären Aufstandskräfte die Gewichtskraft des Kraftfahrzeuges bestimmt.

Die Weiterbildung des Anspruchs 6 ist auf ein Kraftfahrzeug gerichtet, das jedem Rad des Kraftfahrzeuges zugeordnet eine Luftfeder aufweist. Der Vorteil der Weiterbildung ist darin zu sehen, dass bei derartigen Kraftfahrzeugen die Gewichtskraft bzw. die Masse des Kraftfahrzeuges aus den stationären Radaufstandskräften auf einfache Art und Weise berechnet werden kann. Die berechnete Gewichtskraft kann beispielsweise als Eingangsgröße für einFahrstabilitätsprogramm verwendet werden. Ferner ist es möglich, den Fahrer des Kraftfahrzeuges zu warnen, wenn das zulässige Gesamtgewicht des Kraftfahrzeuges überschritten ist.

Gemäß einer Weiterbildung der Erfindung nach Anspruch 9

- wird aus der Summe der stationären Radaufstandskräfte der Räder mindestens einer Fahrzeugachse die zu dieser gehörige stationäre Achslast bestimmt
- für mindestens diese Fahrzeugachse wird die stationäre Achslastverteilung aus dem Quotienten der stationären Achslast zur Fahrzeuggewichtskraft berechnet.

Der Vorteil dieser Weiterbildung ist darin zu sehen, dass ein Überschreiten der zulässigen Achslasten, die für die Vorder- und die Hinterachse unterschiedlich sind, schnell erkannt werden und dem Fahrer gegebenenfalls ein Hinweis gegeben werden kann. Da die Vorderachse eines Kraftfahrzeuges in der Regel durch Zusatzgepäck nicht wesentlich belastet wird und die Achslast der Hinterachse separat bestimmbar ist, kann mit der Weiterbildung ein Überladen des Kraftfahrzeuges schnell und zuverlässig erkannt werden.

Gemäß einer Weiterbildung der Erfindung nach Anspruch 10

- wird aus der Summe der Radaufstandskräfte der Räder mindestens einer Fahrzeugachse die zu dieser gehörige dynamische Achslast bestimmt und
- wird für mindestens diese Fahrzeugachse die dynamische Achslastverteilung aus dem Quotienten der dynamischen Achslast zur Fahrzeuggewichtskraft berechnet.

Der Vorteil dieser Weiterbildung ist darin zu sehen, dass sich die dynamische Achslastverteilung im Kraftfahrzeug auf einfache Art und Weise bestimmen lässt. Die so berechnete dynamische Achslastverteilung kann als Eingangsgröße für ein Fahrstabilitätsprogramm genutzt werden.

Ein Ausführungsbeispiel und weitere Vorteile der Erfindung werden im Zusammenhang mit den nachstehenden Figuren erläutert, darin zeigt:

Figur 1    eine Luftfederungsanlage in schematischer Darstellung,
Figur 2    eine Luftfeder im Querschnitt,
Figur 3    ein Diagramm.

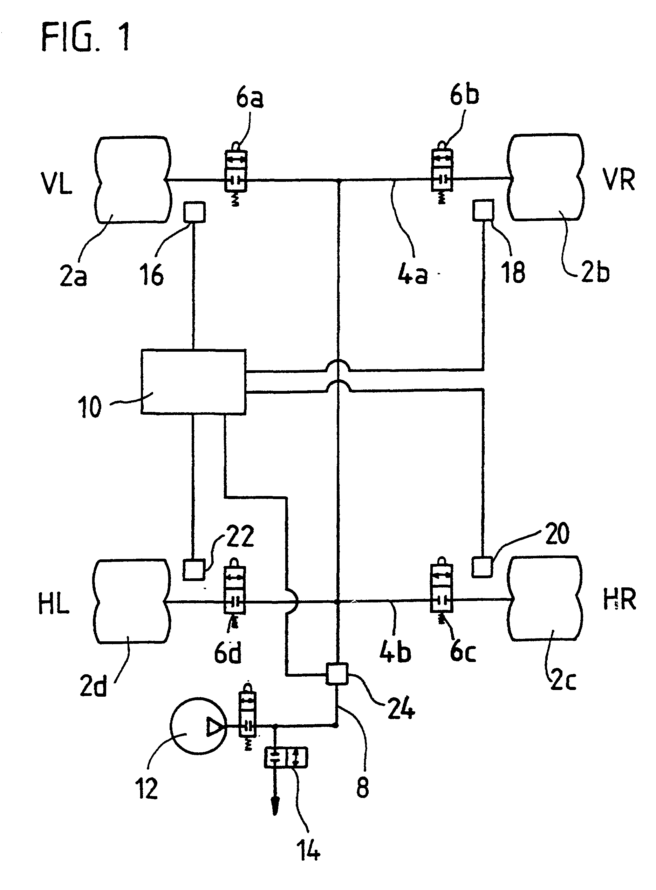

Figur 1 zeigt in stark schematisierter Darstellung eine Luftfederungsanlage für ein Kraftfahrzeug, wobei nur die für die nachfolgenden Erläuterungen notwendigen Bestandteile gezeigt sind. Die Luftfederungsanlage verfügt über Luftfedern 2a, 2b, die der Vorderachse des Kraftfahrzeuges zugeordnet sind, und über Luftfedern 2c, 2d, die der Hinterachse des Kraftfahrzeuges zugeordnet sind. Mit den Luftfedern 2a bis 2d ist ein (nicht gezeigter) Fahrzeugaufbau des Kraftfahrzeuges gegenüber den Achsen federnd gelagert. Die Luftfedern 2a, 2b stehen über eine Querleitung 4a und die Luftfedern 2c, 2d über eine Querleitung 4b mit einander in Verbindung. Jede Querleitung 4a, 4b enthält zwei Quersperrventile 6a, 6b und 6c, 6d, von denen jeweils eins einer Luftfeder 2a bis 2d zugeordnet ist. Darüber hinaus stehen die Querleitung 4a, 4b mit einer weiteren Leitung 8 in Verbindung, über die die Luftfedern 2a bis 2d mit Hilfe des Kompressors 12 mit Druckluft befüllt werden bzw. über die Druckluft aus den Luftfedern 2a bis 2d über das Ventil 14 in die Atmosphäre abgelassen wird. Dazu werden von der Steuereinheit 10 die Steuereingänge der entsprechenden Ventile 6a bis 6d, 14 und des Kompressors 12 angesteuert.

Über die bisher genannten Bestandteile hinaus verfügt die Luftfederungsanlage in der Leitung 8 über einen Drucksensor 24 und über Höhensensoren 16, 18, 20 und 22, von denen jeweils einer einer Luftfeder 2a bis 2d der Luftfederungsanlage zugeordnet ist. Mit dem Drucksensor 24 kann der Druck in den Luftfedern 2a bis 2d gemessen werden. Mit den Höhensensoren 16 bis 22 kann die aktuelle Höhenlage der Luftfedern 2a bis 2d bzw. die Höhenlage des Fahrzeugaufbaus gemessen werden. Wie dies im Einzelnen erfolgt, wird später erläutert.

Mit Hilfe der in der Figur 1 dargestellten Luftfederungsanlage kann die stationäre Radaufstandskraft $FS_i$ an einem Kraftfahrzeugrad nach folgender Formel berechnet werden:

$$(1) \qquad FS_i = P_i \times A_i; \; i = 2a, 2b, 2c, 2d$$

hierin bedeuten $P_i$ der Luftdruck in der Luftfeder i und $A_i$ der wirksame Querschnitt in der Luftfeder i. Soll beispielsweise die stationäre Radaufstandskraft für das Kraftfahrzeugrad in der Position "vorne links" berechnet werden, wird in die Formel 1 das entsprechende Produkt für die Luftfeder 2a berechnet.

Die Berechnung der stationären Radaufstandskraft eines Kraftfahrzeugrades erfolgt unter Zugrundelegung der Ruhelage des Fahrzeugaufbaus im Bereich des Kraftfahrzeugrades, d.h. bei der Bestimmung der stationären Radaufstandskraft wird davon ausgegangen, dass sich der Fahrzeugaufbau im Bereich des Kraftfahrzeuges in Ruhe befindet. Wie die Ruhelage bestimmt wird, wird im Einzelnen später erläutert.

Der Luftdruck in jeder einzelnen Luftfeder 2a bis 2d wird zur Berechnung der stationären Radaufstandskraft vorzugsweise schrittweise für jede einzelne Luftfeder hintereinander gemessen. Anhand der Luftfeder 2a wird im Folgenden erläutert, wie dies im Stillstand des Kraftfahrzeuges geschieht (im Stillstand des Kraftfahrzeuges ist nahezu sichergestellt, dass sich der Fahrzeugaufbau tatsächlich im Bereich eines jeden Kraftfahrzeugrades in Ruhe befindet): Von der Steuereinheit 10 wird zunächst der Eingang des Quersperrventils 6a bestromt, so dass dieses von dem in der Figur 1 gezeigten Grundzustand in seinen Schaltzustand übergeht. Die übrigen Ventile 6b bis 6d und das Ventil 14 bleiben in ihrem in der Figur 1 gezeigten Grundzustand. Die Luftfeder 2a wird dann über die Querleitung 4a und die Leitung 8 mit dem Drucksensor 24 verbunden. Nach einer Zeit von 0,2 bis 1 Sekunde hat sich am Drucksensor 24 der in der Luftfeder 2a vorliegende Luftdruck eingestellt und wird danach über einen Zeitraum, der bevorzugt zwischen 1 und 5 Sekunden liegt, ständig gemessen. Der Drucksensor 24 bildet aus den Messwerten einen Mittelwert und überträgt diesen an die Steuereinheit 10. In der Steuereinheit 10 wird der gemessene Druckmittelwert der Luftfeder 2a zugeordnet und gespeichert (die Steuereinheit 10 "weiß", dass der übertragene Druckmittelwert zur Luftfeder 2a gehört, weil sie zur Druckmessung das zu dieser gehörige Quersperrventil 6a angesteuert hat). Nach erfolgter Druckmessung wird der Steuereingang des Quersperrventils 6a von der Steuereinheit 10 nicht mehr bestromt, so dass dieses wieder in seinen Grundzustand übergeht.

Der Luftdruck kann in den Luftfedern 2b bis 2d an sich auf die gleiche Art und Weise gemessen werden. Von der Steuereinheit 10 ist dann lediglich das entsprechende Quersperrventil 6b bis 6d anzusteuern.

Der Luftdruck kann so - wie oben erläutert - auch während der Fahrt des Fahrzeuges gemessen werden. Die Ventilöffnungszeit des entsprechenden Quersperrventils wird dann lediglich auf eine Dauer von ca.2 bis 10 Sekunden verlängert, so dass der entsprechende Druckwert in einer Luftfeder 2a bis 2d über einen längeren Zeitraum am Drucksensor 24 anliegt und somit eine Mittelwertbildung über einen langen Zeitraum möglich ist. Während der Fahrt in der Luftfeder 2a bis 2d auftretende Druckschwankungen, die auf eine Schwankung des Fahrzeugaufbaus um seine Ruhelage zurückzuführen sind, werden somit bei der Mittelwertbildung herausgefiltert. Somit kann durch die Mittelwertbildung auch während der Fahrt des Fahrzeuges der Druck in der Luftfeder 2a bis 2d gemessen werden, der in der Ruhelage des Fahrzeugaufbaus in dieser Luft vorliegt, obwohl sich der Fahrzeugaufbau tatsächlich nicht in Ruhe befindet.

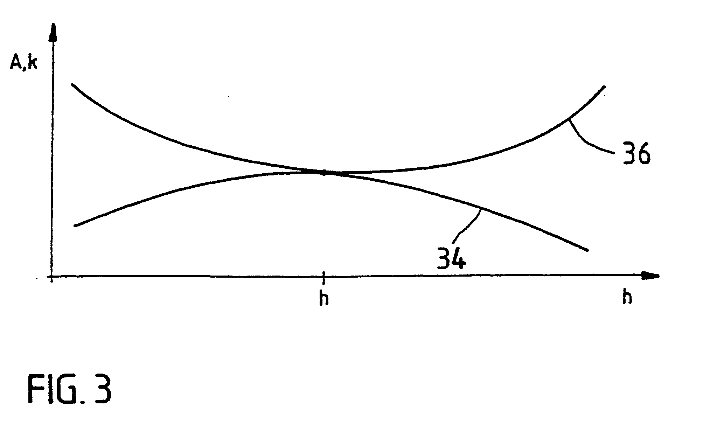

Bei der Berechnung der stationären Radaufstandskraft kann für die wirksame Querschnittsfläche der Luftfeder ein konstanter Wert eingesetzt werden. Dies ist insbesondere dann möglich, wenn diese nicht oder nur in geringem Maße von der aktuellen Höhe der Luftfeder 2a bis 2d abhängig ist. In den meisten Fällen ist die wirksame Querschnittsfläche der Luftfedern 2a bis 2d jedoch eine Funktion von ihrer aktuellen Höhenlage. Bevorzugt wird diese deshalb mit Hilfe der Höhensensoren 16 bis 22 bestimmt und einer Tabelle oder eine Kennlinie (siehe Figur 3) wird die zu der aktuellen Höhenlage gehörige wirksame Querschnittsfläche der Luftfeder 2 bis 2d entnommen. Bei der Bestimmung der stationären Radaufstandskraft ist für die Bestimmung der Querschnittsfläche die Ruhelage der entsprechenden Luftfeder 2a bis 2d maßgebend, d.h. die Höhenlage der Luftfeder, die eingenommen wird, wenn sich der Fahrzeugaufbau und die Räder des Fahrzeuges im Bereich der Luftfeder in vertikaler Richtung in Ruhe befindet.

Wenn während der Bestimmung der Ruhelage einer Luftfeder (die gleichbedeutend und mit der Ruhelage des Fahrzeugaufbaus im Bereich dieser Luftfeder ist) keine Änderung der aktuellen Höhenlage erfolgt, wie es z.B. im Stillstand des Kraftfahrzeuges meistens der Fall ist, kann die Ruhelage der Luftfedern 2a bis 2d direkt aus dem Signal der Höhensensoren 16 bis 22 bestimmt und in Verbindung mit der entsprechenden Luftfeder 2a bis 2d in der Steuereinheit gespeichert werden. Soll die Ruhelage der Luftfedern 2a bis 2d bestimmt werden, wenn sich die aktuelle Höhenlage der Luftfedern 2a bis 2d, z.B. auf Grund einer Schwingung des Fahrzeugaufbaus oder der Räder, ständig ändert, so wird in der Steuereinheit 10 das entsprechende Signal der Höhensensoren 16 bis 22 über einen längeren Zeitraum gemittelt. In diesem Fall werden die Schwankungen um die Ruhelage der Luftfedern 2a bis 2d herausgefiltert. Der Zeitraum, über den gemittelt wird, beträgt vorzugsweise 15 - 150 Sekunden.

Aus den stationären Radaufstandskräften $FS_i$; i = 2a bis 2d kann die Fahrzeugsgewichtskraft FG des Kraftfahrzeuges wie folgt berechnet werden:

$$(2) \qquad FG = FS_{2a} + FS_{2b} + FS_{2c} + FS_{2d}$$

Die stationären Achslasten ALVS, ALHS an der Vorderachse und an der Hinterachse können wie folgt berechnet werden:

$$(3) \qquad ALVS = FS_{2a} + FS_{2b}$$

$$(4) \qquad ALHS = FS_{2c} + FS_{2d}.$$

Die stationäre Achslastverteilung ALVT kann gemäß der folgenden Formel berechnet werden:

$$(5) \qquad ALVT = ALVS/FG$$

Dieser Wert liegt immer zwischen 0 und 1. Ergibt sich beispielsweise ein Wert von 0,6, so bedeutet dies, dass 60 % der gesamten Fahrzeugmasse auf der Vorderachse ruhen und dementsprechend 40 % auf der Hinterachse.

Die - wie oben erläutert - berechneten Größen für die Ruhelage der Luftfedern 2a bis 2d, die stationären Radaufstandskräfte, die Achslasten und die Fahrzeuggewichtskraft werden in der Steuereinheit 10 gespeichert und stehen dort für weitere Berechnungen zur Verfügung.

Mit Hilfe der in der Figur 1 gezeigten Luftfederungsanlage können auch die dynamischen Radaufstandskräfte an den Kraftfahrzeugrädern nach folgender Formel berechnet werden:

$$(6) \qquad FD_i = k_i \times (h_i\,(t) - h_{i,\,Ruhe}); \ i = 2a, \ 2b, \ 2c, \ 2d$$

Hierin bedeuten $FD_i$ die dynamische Radaufstandskraft am Rad i, $k_i$ die Federsteifigkeit der entsprechenden Luftfeder i, $h_i\,(t)$ die aktuelle Höhenlage der Luftfeder i und $h_{i,\,Ruhe}$ die Ruhelage der Luftfeder i. Die in den Klammern stehende Differenz in der Formel 6 gibt also die Auslenkung der Luftfeder i aus ihrer Ruhelage wieder. Die aktuelle Höhelage $h_i\,(t)$ wird bestimmt, indem von der Steuereinheit 10 für die Luftfeder i zu der Zeit t die von dem entsprechenden Höhesensor 16 bis 22 angezeigte aktuelle Höhenlage der Luftfeder i berücsichtigt wird. Die Ruhelage $h_i,\, Ruhe$ wird in der Steuereinheit 10 so bestimmt, wie es bereits zuvor erläutert worden ist. Ist bereits eine entsprechende Ruhelage in der Steuereinheit 10 gespeichert, so kann auf diese zurückgegriffen werden und eine Neubestimmung der Ruhelage der Luftfeder i ist nicht notwendig.

Für die Federsteifigkeit $k_i$ der Luftfeder i kann ein konstanter Wert zu Grunde gelegt werden. Dies ist insbesondere dann möglich, wenn sie nicht oder über geringem Maße von der aktuellen Höhenlage der Luftfeder i abhängig ist. Bevorzugt wird jedoch die Höhenabhängigkeit der Federsteifigkeit $k_i$ berücksichtigt. In diesem Fall ist in der Steuereinheit 10 eine Tabelle oder eine Kennlinie (siehe Figur 3) gespeichert, aus der die Federsteifigkeit für die aktuelle Höhe $h_i\,(t)$ bestimmt werden kann.

Mit Hilfe der in der Figur 1 gezeigten Luftfederungsanlage kann auch der Einfluss eines an der Vorderachse vorhandenen Querstabilisators berücksichtigt werden. Die von einem Querstabilisator an der Vorderachse ausgeübte Kraft berechnet sich nach folgender Formel:

$$(7) \qquad F_{Stab,\,V} = k_V \times ((h_{2b}\,(t) - h_{2b,\,Ruhe}) - (h_{2a}\,(t) - h_{2a},\ Ruhe))$$

Hierin bedeuten $F_{Stab}$ die Kraft des Querstabilisators, $k_V$ die Federsteifigkeit des Querstabilisators, $h_{2b}\,(t)$ die aktuelle Höhenlage und $h_{2b,\,Ruhe}$ die Ruhelage der Luftfeder 2b und $h_{2a}\,(t)$ die aktuelle Höhenlage und $h_{2a,\,Ruhe}$ die Höhenlage der Luftfeder 2a. Die in der Formel 7 in der Klammer angegebene Differenz gibt also die Querneigung des Kraftfahrzeuges an der Vorderachse wieder.

Die durch einen Querstabilisator an der Hinterachse des Kraftfahrzeuges erzeugte Kraft wird entsprechend gemäß der folgenden Formel berechnet:

$$(8) \qquad F_{Stab,\,H} = k_h \times ((h_{2c}\,(t) - h_{2c,\,Ruhe}) - (h_{2d}\,(t) - h_{2d,\,Ruhe}))$$

Will man bei der Berechnung der dynamischen Radaufstandskräfte den Einfluss der Querstabilisatoren berücksichtigen, so sind diese nach den folgenden Formeln zu berechnen:

$$(9) \qquad FD_{2a,\,gesamt} = FD_{2a} + F_{Stab,V}$$

$$(10) \qquad FD_{2b,\,gesamt} = FD_{2b} - F_{Stab,V}$$

$$(11) \qquad FD_{2c,\ gesamt} = FD_{2c} - F_{Stab,\ H}$$

$$(12) \qquad FD_{2d,\ gesamt} = FD_{2d} + F_{Stab,\ H}$$

Aus den berechneten Größen ergibt sich die gesamt Radaufstandskraft $F_{i,\ gesamt}$ am Kraftfahrzeugrad i.zu:

$$(13) \qquad F_{i,\ gesamt} = FS_i + FD_{i,\ gesamt;}\ i = 2a,\ 2b,\ 2c,\ 2d.$$

$$F_{i,\ gesamt}\ \text{am Kraftfahrzeugrad i.}$$

Mit den oben genannten Größen kann die dynamische Achslast an der Vorderund an der Hinterachse nach folgenden Formeln berechnet werden:

$$(14) \qquad ALVD_{Achslast,} = F_{2a,\ gesamt} + F_{2b,\ gesamt}$$

$$(15) \qquad ALHD_{Achslast,} = F_{2c,\ gesamt} + F_{2d,\ gesamt}$$

Im Folgenden wird erläutert, wie mit Hilfe der in der Figur 1 gezeigten Luftfederungsanlage der Einfluss eines Dämpfers, von denen jeweils einer den Luftfedern 2a bis 2d zugeordnet ist, berücksichtigt werden kann. Die von einem Dämpfer ausgeübte Kraft berechnet sich nach folgender Formel:

$$(16) \qquad F_{Dämpf,\ i} = K_{Dämpf,\ i} \times v_i\ ;\ i = 2a,\ 2b,\ 2c,\ 2d$$

Hierin bedeuten $F_{Dämpf,\ i}$ die Kraft des Dämpfers am Rad i, $K_{Dämpf,\ i}$ der Dämpfungskoeffizient des Dämpfers am Rad i, $v_i$ die Geschwindigkeit, die das Kraftfahrzeugrad i relativ zum Fahrzeugaufbau hat. Die Geschwindigkeit $v_i$ kann für jedes Rad i nach der folgenden Formel berechnet werden:

$$(17) \qquad v_i = (H_i\ (t) - H_i\ (t - \delta t))/\delta t;\ i = 2a,\ 2b,\ 2c,\ 2d$$

Hierin bedeutet $H_i\ (t)$ die aktuelle Höhenlage der Luftfeder zum Zeitpunkt t und $H_i\ (t - \delta t)$ die aktuelle Höhenlage der Luftfeder i zum Zeitpunkt $t - \delta t$.

Wenn bei der Berechnung der gesamten Radaufstandskraft die durch die Dämpfer erzeugten Kräfte berücksichtigt werden sollen, sind die Dämpfungskräfte gemäß der Formel 16 zu den gesamten Radaufstandskräften $F_{i,\ gesamt}$ gemäß der Formel 13 hinzuzuaddieren.

Bei der Berechnung der Dämpfungskraft kann für den Dämpfungskoeffizienten $K_{Dämpf,\ i}$ ein konstanter Wert zu Grunde gelegt werden. Wenn in dem Kraftfahrzeug jedoch Dämpfer mit verstellbaren Dämpfungskoeffizienten verwendet werden, wird bei der Berechnung der Dämpfungskraft bevorzugt der aktuell von der Regelelektronik des Dämpfers eingestellte Dämpfungskoeffizient berücksichtigt.

Die zur Bestimmung der oben erwähnten Radaufstandskräfte notwendigen Druckwerte und Höhenwerte werden mittels des Drucksensors 24 bzw. mittels der Höhensensoren 16 bis 22 nur vorgenommen, wenn die Steuereinheit 10 registriert, dass die Zündung des Fahrzeuges eingeschaltet ist und die Türen sowie der Kofferraum geschlossen sind. In diesem Fall verändert sich die Masse des Kraftfahrzeuges, die die Radaufstandskräfte beeinflusst, nicht mehr wesentlich. Darüber hinaus findet eine Aktivieung der Druckmessung durch die Steuereinheit 10 nur dann statt, wenn die Höhenabweichung an jeder Luftfeder 2a bis 2d in einem Toleranzbereichen zu einer für die entsprechende Luftfeder vorgegebenen Solllage liegt. Nach dem Regelvorgang an einer Achse des Kraftfahrzeuges wird von der Steuereinheit 10 der Druck in den Luftfedern 2a bis 2d, die der Achse zugeordnet sind, erneut gemessen, weil sich dieser auf Grund des Regelvorganges verändert haben kann.

Eine Druckmessung wird von der Steuereinheit 10 nicht während einer Kurvenfahrt des Fahrzeuges vorgenommen, weil sich durch Einflüsse der Querstabilisatoren auf die Luftfedern 2a bis 2d das Ergebnis verfälschen könnte. Darüber hinaus wird eine Druckmessung von der Steuereinheit 10 nicht während eines Niveauregelvorganges vorgenommen, damit dieser in einer möglichst kurzen Zeit abgeschlossen werden kann.

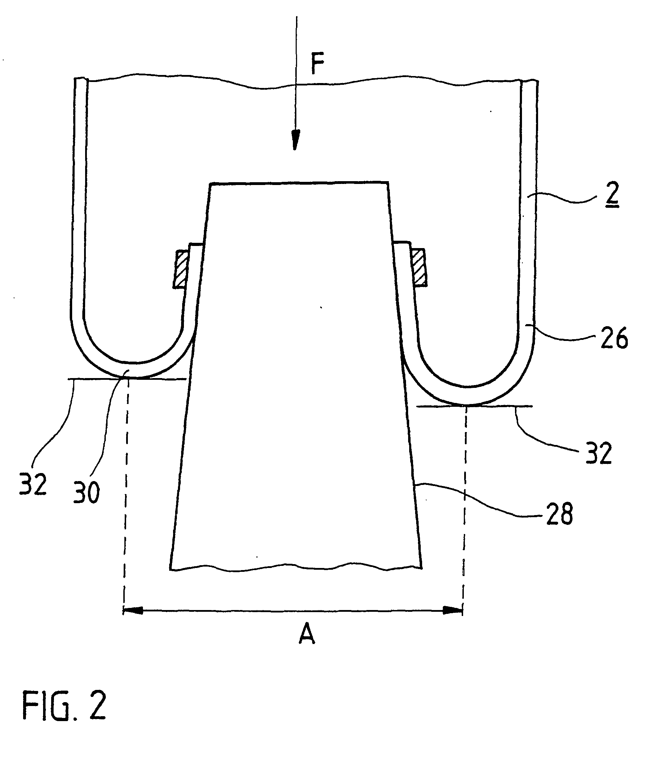

Die Figur 2 zeigt eine Luftfeder 2a bis 2d im Querschnitt. Der Balg 26 der Luftfeder 2a bis 2d rollt auf einem Abrollkolben 28 ab. Dabei bildet sich am Abrollkolben 28 eine Abrollfalte 30 ab. An der Stelle, an der die Tangenten 32 an den Balg 26 der Luftfeder senkrecht zur Federkraft bzw. Tragkraft F verlaufen, liegt der äußere Begrenzungskreis der wirksamen Querschnittsfläche A.

Figur 3 zeigt ein Diagramm, in dem die wirksame Querschnittsfläche A und die Federsteifigkeit k einer Luftfeder 2a bis 2d über der Höhe h aufgetragen sind. Dem Diagramm ist eine Kennlinie 34 zu entnehmen, die die Abhängigkeit der wirksamen Querschnittsfläche A von der Höhe h wiedergibt. Darüber hinaus ist dem Diagramm eine Kennlinie 36 zu entnehmen, die die Abhängigkeit der Federsteifigkeit k einer Luftfeder von der Höhe wiedergibt. In der Steuereinheit 10 ist für alle Luftfedern 2a bis 2d, die eine unterschiedliche Abhängigkeit zeigen, ein entsprechendes Diagramm gespeichert, so dass die Steuereinheit zur Berechnung der Radaufstandskrtäfte bei Kenntnis der aktuellen Höhenlage h der Luftfeder den aktuellen Wert für die Querschnittsfläche A und für die Federsteifigkeit k bestimmen kann.

*Bezugzeichenliste*

| 2a, 2b, 2c, 2d | Luftfedern |
|---|---|
| 4a, 4b | Querleitung |
| 6a, 6b, 6c, 6d | Quersperrventile |
| 8 | Leitung |
| 10 | Steuereinheit |
| 12 | Kompressor |
| 14 | Ablassventil |
| 16, 18, 20, 22 | Höhensensoren |
| 24 | Drucksensor |
| 26 | Balg |
| 28 | Abrollkolben |
| 30 | Falte |
| 32 | Tangente |
| 34,36 | Kennlinie |

**Patentansprüche**

1. Verfahren zur Bestimmung der Radaufstandskraft eines Kraftfahrzeugrades, dem eine Luftfeder (2a-2d) zugeordnet ist, mit der der Fahrzeugaufbau gegenüber dem Kraftfahrzeugrad abgefedert ist, **dadurch gekennzeichnet, dass**

   - eine stationäre Radaufstandskraft aus dem Produkt der wirksamen Querschnittsfläche der Luftfeder (2a-2d) und dem Druck in der Luftfeder (2a-2d) unter Zugrundelegung der Ruhelage des Fahrzeugaufbaus im Bereich des Kraftfahrzeugrades berechnet und gespeichert wird,
   - eine dynamische Radaufstandskraft aus dem Produkt der Federsteifigkeit der Luftfeder (2a-2d) und der Auslenkung der Luftfeder (2a-2d) aus ihrer Ruhelage berechnet wird, und
   - zur Bestimmung der Radaufstandskraft die stationäre Radaufstandskraft und die dynamische Radaufstandskraft addiert werden.

2. Verfahren zur Bestimmung der Radaufstandskraft eines Kraftfahrzeugrades nach Anspruch 1, **dadurch gekennzeichnet, dass** bei der Berechnung der stationären Radaufstandskraft die Höhenabhängigkeit der wirksamen Querschnittsfläche und bei der Berechnung der dynamischen Radaufstandskraft die Höhenabhängigkeit der Federsteifigkeit der Luftfeder (2a-2d) berücksichtigt wird.

3. Verfahren zur Bestimmung der Radaufstandskraft eines Kraftfahrzeugrades nach einem der Ansprüche 1 bis 2, **dadurch gekennzeichnet, dass**

   - der Fahrzeugaufbau gegenüber mindestens einer Fahrzeugachse, die einen Querstabilisator enthält, mit Luftfedern (2a-2d) abgefedert ist, und dass
   - aus dem Produkt der Federsteifigkeit des Querstabilisators und der Differenz der Auslenkungen der Luftfedern (2a-2d) aus ihrer Ruhelage eine Ausgleichskraft berechnet wird und dass

- zur Bestimmung der Radaufstandskraft eines Rades der Fahrzeugachse die stationäre Radaufstandskraft und die dynamische Radaufstandskraft und vorzeichenberichtigt die Ausgleichskraft addiert werden.

4. Verfahren zur Bestimmung der Radaufstandkraft eines Kraftfahrzeugrades nach einem der Ansprüche 1 bis 3, **dadurch gekennzeichnet, dass**

- dem Kraftfahrzeugrad ein Dämpfer zugeordnet ist und aus dem Produkt des Dämpfungskoeffizienten und der Geschwindigkeit, die das Kraftfahrzeugrad relativ zum Fahrzeugaufbau hat, eine Dämpfungskraft berechnet wird und dass
- die Dämpfungskraft zur Radaufstandskraft addiert wird.

5. Verfahren nach Anspruch 4, **dadurch gekennzeichnet, dass** bei einem Dämpfer mit verstellbarem Dämpfungskoeffizienten der aktuell eingestellte Dämpfungskoeffizient zur Berechnung der Dämpfungskraft verwendet wird.

6. Verfahren zur Bestimmung der Radaufstandskraft eines Kraftfahrzeugrades nach einem der Ansprüche 1 bis 5, **dadurch gekennzeichnet, dass** die Ruhelage des Fahrzeugaufbaus im Bereich eines jeden Kraftfahrzeugrades und stationäre Radaufstandskraft eines jeden Kraftfahrzeugrades, dem eine Luftfeder (2a-2d) zugeordnet ist, unmittelbar nach Einschalten der Zündung und unmittelbar nach einem Regelvorgang an der dem Rad zugeordneten Luftfeder bestimmt wird.

7. Verfahren zur Bestimmung der Radaufstandskraft eines Kraftfahrzeugrades nach einem der Ansprüche 1 bis 6, **dadurch gekennzeichnet, dass** eine Bestimmung der Ruhelage des Fahrzeugaraufbaus im Bereich eines Kraftfahrzeugrades und eine Bestimmung des Drucks in einer Luftfeder (2a-2d), mit dessen Hilfe die stationäre Radaufstandskraft berechnet wird, während einer Kurvenfahrt, einer Schiefstellung oder einer Verschränkung des Kraftfahrzeuges unterdrückt wird.

8. Verfahren zur Bestimmung der Radaufstandskraft eines Kraftfahrzeugrades nach einem der Ansprüche 1 bis 7, **dadurch gekennzeichnet, dass**

- jedem Rad des Kraftfahrzeuges eine Luftfeder (2a-2d) zugeordnet ist und dass
- für jedes Rad die stationäre Radaufstandskraft berechnet wird und dass
- aus der Summe der stationären Radaufstandskräfte die Gewichtskraft des Kraftfahrzeuges bestimmt wird.

9. Verfahren zur Bestimmung der Radaufstandskraft eines Kraftfahrzeugrades nach einem der Ansprüche 1 bis 7, **dadurch gekennzeichnet, dass**

- aus der Summe der stationären Radaufstandskräfte der Räder mindestens einer Fahrzeugachse die zu dieser gehörige stationäre Achslast bestimmt wird und dass
- für mindestens diese Fahrzeugachse die stationäre Achslastverteilung aus dem Quotienten der stationären Achslast zur Fahrzeuggewichtskraft berechnet wird.

10. Verfahren zur Bestimmung der Radaufstandskraft eines Kraftfahrzeugrades nach einem der Ansprüche 1 bis 7, **dadurch gekennzeichnet, dass**

- aus der Summe der Radaufstandskräfte der Räder mindestens einer Fahrzeugachse die zu dieser gehörige dynamische Achslast bestimmt wird und dass
- für mindestens diese Fahrzeugachse die dynamische Achslastverteilung aus dem Quotienten der dynamischen Achslast zur Fahrzeuggewichtskraft berechnet wird.

## Claims

1. Method for determining the wheel loading of an automotive vehicle wheel with which an air spring (2a-2d) is associated, by means of which the vehicle body is sprung relative to the vehicle wheel, **characterised in that**

- a stationary wheel loading is calculated from the product of the effective cross-sectional area of the air spring (2a-2d) and the pressure in the air spring (2a-2d) based on the rest position of the vehicle body in the region of the vehicle wheel, and stored,

- a dynamic wheel loading is calculated from the product of the spring stiffness of the air spring (2a-2d) and the deflection of the air spring (2a-2d) from its rest position, and
- the stationary wheel loading and the dynamic wheel loading are added together to determine the wheel loading.

2. Method for determining the wheel loading of an automotive vehicle wheel according to claim 1, **characterised in that** the height-dependency of the effective cross-sectional area is taken into account in the calculation of the stationary wheel loading and the height-dependency of the spring stiffness of the air spring (2a-2d) is taken into account in the calculation of the dynamic wheel loading.

3. Method for determining the wheel loading of an automotive vehicle wheel according to one of claims 1 to 2, **characterised in that**

- the vehicle body is sprung by means of air springs (2a-2d) relative to at least one vehicle axle which contains a roll stabiliser, and **in that**
- a compensating force is calculated from the product of the spring stiffness of the roll stabiliser and the difference of the deflections of the air springs (2a-2d) from their rest position, and **in that**
- the stationary wheel loading and the dynamic wheel loading, and the compensating force, corrected for sign, are added to determine the wheel loading of a wheel of the vehicle axle.

4. Method for determining the wheel loading of an automotive vehicle wheel according to one of claims 1 to 3, **characterised in that**

- a damper is associated with the vehicle wheel and a damping force is calculated from the product of the damping coefficient and the speed which the vehicle wheel has relative to the vehicle body, and **in that**
- the damping force is added to the wheel loading.

5. Method according to claim 4, **characterised in that** where the damper has an adjustable damping coefficient, the currently set damping coefficient is used to calculate the damping force.

6. Method for determining the wheel loading of an automotive vehicle wheel according to one of claims 1 to 5, **characterised in that** the rest position of the vehicle body in the region of each vehicle wheel, and the stationary wheel loading of each vehicle wheel with which an air spring (2a-2d) is associated, are determined immediately after switching on the ignition and immediately after a control operation on the air spring associated with the wheel.

7. Method for determining the wheel loading of an automotive vehicle wheel according to one of claims 1 to 6, **characterised in that** determining the rest position of the vehicle body in the region of a vehicle wheel and determining the pressure in an air spring (2a-2d), with the aid of which the stationary wheel loading is calculated, are suppressed during cornering, an inclined position or a twisting of the automotive vehicle.

8. Method for determining the wheel loading of an automotive vehicle wheel according to one of claims 1 to 7, **characterised in that**

- an air spring (2a-2d) is associated with each wheel of the automotive vehicle, and **in that**
- the stationary wheel loading for each wheel is calculated, and **in that**
- the weight of the vehicle is determined from the sum of the stationary wheel loadings.

9. Method for determining the wheel loading of an automotive vehicle wheel according to one of claims 1 to 7, **characterised in that**

- from the sum of the stationary wheel loadings of the wheels of at least one vehicle axle, the stationary axle load pertaining to this axle is determined, and **in that**
- for at least this vehicle axle, the stationary axle load distribution is calculated from the quotient of the stationary axle load to the vehicle weight.

10. Method for determining the wheel loading of an automotive vehicle wheel according to one of claims 1 to 7, **characterised in that**

- from the sum of the wheel loadings of the wheels of at least one vehicle axle, the dynamic axle load pertaining to this axle is determined, and **in that**
- for at least this vehicle axle, the dynamic axle load distribution is calculated from the quotient of the dynamic axle load to the vehicle weight.

**Revendications**

1. Procédé permettant de déterminer la force d'appui d'une roue d'un véhicule automobile à laquelle est affecté un ressort pneumatique (2a - 2d) au moyen duquel la caisse du véhicule est suspendue par rapport à la roue du véhicule, **caractérisé en ce que**

   - une force d'appui stationnaire de roue est calculée et mémorisée d'après le produit de la surface de section efficace du ressort pneumatique (2a - 2d), et d'après la pression dans le ressort pneumatique (2a - 2d), à partir de la position de repos de la caisse du véhicule, dans la zone de la roue du véhicule automobile,
   - une force d'appui dynamique de roue est calculée d'après le produit de la rigidité du ressort pneumatique (2a - 2d), et de la déviation du ressort pneumatique (2a - 2d) par rapport à sa position de repos, et
   - pour la détermination de la force d'appui de roue, on additionne la force d'appui stationnaire de roue et la force d'appui dynamique de roue.

2. Procédé permettant de déterminer la force d'appui d'une roue d'un véhicule automobile selon la revendication 1, **caractérisé en ce que**, lors du calcul de la force d'appui stationnaire de roue, on tient compte de la surface de section efficace en fonction de son importance et, lors du calcul de la force d'appui dynamique de roue, on tient compte de la rigidité du ressort pneumatique (2a- 2d) en fonction de son importance.

3. Procédé permettant de déterminer la force d'appui d'une roue d'un véhicule automobile selon la revendication 1 ou 2, **caractérisé**

   - **en ce que** la caisse du véhicule, par rapport à au moins un essieu du véhicule qui contient un stabilisateur transversal, est suspendue par des ressorts pneumatiques (2a - 2d), et
   - **en ce que** l'on calcule une force équilibrante d'après le produit de la rigidité du ressort du stabilisateur transversal et d'après la différence des déviations des ressorts pneumatiques (2a - 2d) par rapport à leur position de repos, et
   - **en ce que**, pour déterminer la force d'appui d'une roue de l'essieu d'un véhicule, on additionne la force d'appui stationnaire de roue et la force d'appui dynamique de roue, ainsi que la force équilibrante corrigée par le signe la caractérisant.

4. Procédé permettant de déterminer la force d'appui d'une roue d'un véhicule automobile selon l'une quelconque des revendications 1 à 3, **caractérisé**

   - **en ce qu'**un amortisseur est affecté à la roue du véhicule, et on calcule une force d'amortissement d'après le produit du coefficient d'amortissement et de la vitesse que possède la roue du véhicule automobile par rapport à la caisse du véhicule, et
   - **en ce que** la force d'amortissement est ajoutée à la force d'appui de roue.

5. Procédé selon la revendication 4, **caractérisé en ce que**, dans le cas d'un amortisseur à coefficient d'amortissement réglable, on utilise, pour le calcul de la force d'amortissement, le coefficient d'amortissement actuellement réglé.

6. Procédé permettant de déterminer la force d'appui d'une roue d'un véhicule automobile selon l'une quelconque des revendications 1 à 5, **caractérisé en ce que** la position de repos de la caisse du véhicule, dans la zone de chaque roue du véhicule automobile, et la force d'appui stationnaire de chaque roue du véhicule automobile à laquelle est affecté un ressort pneumatique (2a - 2d), sont déterminées immédiatement après la mise en route de l'allumage et immédiatement après un processus de réglage au niveau du ressort pneumatique affecté à la roue.

7. Procédé permettant de déterminer la force d'appui d'une roue d'un véhicule automobile selon l'une quelconque des revendications 1 à 6, **caractérisé en ce qu'**une détermination de la position de repos de la caisse du véhicule, dans la zone d'une roue d'un véhicule automobile, et une détermination de la pression dans un ressort pneumatique (2a - 2d), pression à l'aide de laquelle on calcule la force d'appui stationnaire de roue, sont supprimées dans un virage, en position inclinée ou lors d'un soulèvement du véhicule automobile.

8.  Procédé permettant de déterminer la force d'appui d'une roue d'un véhicule automobile selon l'une quelconque des revendications 1 à 7, **caractérisé**

    -   **en ce qu'**un ressort pneumatique (2a - 2d) est affecté à chaque roue du véhicule automobile, et
    -   **en ce que**, pour chaque roue, on calcule la force d'appui stationnaire de roue, et
    -   **en ce que**, d'après la somme des forces d'appui stationnaires de roue, on détermine le poids du véhicule automobile.

9.  Procédé permettant de déterminer la force d'appui d'une roue d'un véhicule automobile selon l'une quelconque des revendications 1 à 7, **caractérisé**

    -   **en ce que**, d'après la somme des forces d'appui stationnaires des roues d'au moins un essieu du véhicule, on détermine la charge stationnaire sur l'essieu, relative à cet essieu, et
    -   **en ce que**, pour au moins cet essieu du véhicule, on calcule la répartition de la charge stationnaire sur l'essieu, d'après le quotient de la charge stationnaire sur l'essieu, par rapport au poids du véhicule.

10. Procédé permettant de déterminer la force d'appui d'une roue d'un véhicule automobile selon l'une quelconque des revendications 1 à 7, **caractérisé**

    -   **en ce que**, d'après la somme des forces d'appui des roues d'au moins un essieu du véhicule, on détermine la charge dynamique sur l'essieu, relative à cet essieu, et,
    -   **en ce que**, pour au moins cet essieu du véhicule, on calcule la répartition de la charge dynamique sur l'essieu, d'après le quotient de la charge dynamique sur l'essieu, par rapport au poids du véhicule.

FIG. 1

F

2

26

32

32    30

32

28

A

FIG. 2

FIG. 3